# EUROPÄISCHE PATENTSCHRIFT

(11) **EP 3 433 087 B1**
(45) Veröffentlichungstag und Bekanntmachung des Hinweises auf die Patenterteilung: **09.06.2021**
(21) Anmeldenummer: 17716097.5
(22) Anmeldetag: 23.03.2017
(51) Int. Cl.: B29C 64/135, B29C 64/223, B29C 64/236, B33Y 30/00

(54) **ANLAGE ZUM HERSTELLEN EINES DREIDIMENSIONALEN KÖRPERS**
APPARATUS FOR MANUFACTURING A THREE-DIMENSIONAL BODY
DISPOSITIF POUR FORMER UN OBJET EN TROIS DIMENSIONS

(30) Priorität: 25.03.2016 AT 502472016
(43) Veröffentlichungstag der Anmeldung: 30.01.2019
(73) Patentinhaber: Stadlmann, Klaus, 1030 Wien (AT)
(72) Erfinder: Stadlmann, Klaus, 1030 Wien (AT)
(74) Vertreter: Özer, Alpdeniz
(86) Internationale Anmeldenummer: PCT/AT2017/060073
(87) Internationale Veröffentlichungsnummer: WO 2017/161398

(56) Entgegenhaltungen:
- EP-A1- 2 505 341
- US-A1- 2015 034 007
- US-A1- 2016 059 487

## Beschreibung

Die Erfindung betrifft allgemein eine Stereolithographie-Anlage zum schichtweisen, kontinuierlichen und/oder nicht-kontinuierlichen Aufbau eines dreidimensionalen Körpers.

Mehr im Einzelnen bezieht sich die Erfindung auf eine Anlage zum Aufbau eines Bauteils, enthaltend eine Wanne mit einem zumindest teilweise transparenten Boden, einer zumindest teilweise spannbaren semipermeablen Schicht, zur Aufnahme einer fotosensitiven Substanz, und einer unter der semipermeablen Schicht angeordneten Phase, die in der Lage ist, innerhalb der fotosensitiven Substanz eine Zwischenschicht zu bilden, eine unter dem Wannenboden angeordnete Lichtquelle ist zur bereichsweisen Aushärtung der fotoreaktiven Substanz, sowie eine über der semipermeablen Schicht angeordnete und gegenüber dieser heb- und senkbaren Bauplattform zur Aufnahme des Bauteils bzw. der einzelnen Bauteilschichten.

Die zumindest eine, unter der Wanne zumindest in einer Richtung beweglichen Lichtquelle ist zur gesteuerten Aushärtung der jeweiligen lichtempfindlichen Substanz, durch eine chemisch inerte Phase bzw. lichtunempfindliche Phase und/oder Zwischenphase, vorgesehen.

Dabei wird angestrebt, ein dreidimensionales Objekt, je nach der vorliegenden geometrischen Ausprägung der Teilschicht, kontinuierlich oder nicht-kontinuierlich durch Einsatz der semipermeablen Schicht zu generieren, wie auch einen geometrischen Körper, welcher in einer solchen Anlage bzw. Wanne integriert wird.

Das Erzeugen von dreidimensionalen (3D-)Körpern mit Hilfe von lichtaushärtenden Substanzen, wie z.B. einem Foto-Harz, welche schichtweise ausgehärtet werden, wobei die Querschnittsinformation durch ein Maskenprojektionsverfahren oder durch eine Laser-Quelle erstellt wird, ist unter den verschiedensten Begriffen, wie beispielsweise 3D-Druck, Additive Manufacturing oder Rapid Prototyping, bekannt. In generativen Fertigungsmaschinen, welche einen kontinuierlichen Druckprozess ermöglichen, werden für die Belichtung des Querschnittes bzw. der Schichten meist pixelgesteurte DLP-, MEMS- oder steuerbare Laser eingesetzt. Dabei wird durch die Belichtung eine feste Schicht aus der flüssigen, fotosensitiven Substanz erzeugt. Diese feste Schicht haftet an einem Träger an und wird von einer Referenzfläche durch Anheben des Trägers gelöst bzw. entfernt. So wird sukzessive ein dreidimensionaler Körper aus der fotosensitiven Substanz gebildet.

Aus dem Stand der Technik sind Lösungen bekannt, welche die Abzugskräfte in einem Stereolithographie-Prozess während des Trennvorganges von verschieden ausgebildeten Referenzflächen beschreiben, und welche einen kontinuierlichen Druckprozess offenbaren. Bei Anlagen, die eine Belichtung von unten vorsehen, vgl. z.B. DE 10 2013 215 040 A1, ist eines der größten Probleme das Ablösen der gerade generierten Bauteilschichten, ohne dabei den Bauteil zu zerstören und neue fotosensitive Flüssigkeit in den Spalt zwischen Bauteilschicht und Referenzfläche nachfließen zu lassen. Wird der Bauteil so von der Bodenplatte der Wanne gelöst, dass ein sicheres Entformen möglich ist, so hat dies negative Auswirkungen auf die Geschwindigkeit des Bauprozesses. In der Literatur, wie z.B. in CA 2 054 276 A1, werden diverse Methoden zur Lösung der Bauteilschicht von einem Wannenboden beschrieben; dabei werden z.B. Silikonschichten, Trennfolien und dergl. verwendet. Diese Methoden erlauben jedoch keinen kontinuierlichen Prozess und erhöhen damit die Bauzeiten des Objektes. Dabei können jedoch fast beliebig große Bauteilflächen erzeugt werden, da durch die Höhe des Rückhubes und die Einführung einer Wartezeit die Möglichkeit geschaffen wird, dass neue fotoreaktive Substanz nachfließen kann.

In der jüngeren Literatur finden sich Systeme, welche in der Lage sind, beispielsweise durch Einsatz eines Mehrphasensystems, einen kontinuierlichen Bauprozess zu ermöglichen. Dabei kommt es nur zu einem geringen Rückhub, welcher kontinuierlich erfolgt. Dadurch ist die Höhe des Spalts, der zum Nachließen der fotoreaktiven Substanz gebildet wird, in der Größenordnung der angestrebten Schichtdicke. Dies führt vor allem bei großen Bauteilflächen zu einem ungenügenden Transport von neuer fotosensitiver Flüssigkeit in den Spalt. Auch ist beim Einsatz von Mehrphasensystemen die Grenzfläche nicht stabil, und es kann zu einer Wellenbildung oder dergl. kommen.

Ein Beispiel für eine derartige Technik ist in US 4,996,010 A beschrieben. Dabei ist eine Wanne zur Aufnahme einer fotosensitiven Flüssigkeit vorgesehen, in der auch eine lichtunempfindliche Substanz unterhalb der fotoreaktiven Substanz geschichtet ist. Die Belichtung erfolgt von unten, durch die lichtunempfindliche Schicht hindurch, und die Aushärtung der Schicht erfolgt an der Phasengrenze der beiden Schichten. Der Vorteil einer solchen Anordnung liegt in der Minimierung der notwendigen Kraft, die bei der Trennung der soeben ausgehärteten Schicht notwendig ist.

Die WO 2015/164234 A1 zeigt ein System mit mehreren chemischen Phasen, welche nicht mischbar sind, wobei sich die fotosensitive Schicht über einer unreaktiven Trägerphase befindet. Diese Anordnung wird auch zur kontinuierlichen Generierung eines dreidimensionalen Objektes genutzt. Dabei muss die untere Phase eine höhere Dichte aufweisen als die darüber geschichtete, lichtempfindliche Substanz.

In DE 10 2013 102 377 A1 ist ein weiteres Mehrphasensystem geoffenbart, bei dem zur Nivellierung der Phasengrenze ein Bauteil an der Phasengrenze entlang bewegt wird. Dieser Bauteil steht in direkten Kontakt mit beiden Phasen und kann vom Bauteilquerschnitt abhängige Wechselwirkungen zwischen den Phasen korrigieren. Diese Anordnung weist jedoch Nachteile in Bezug auf die Handhabung im Betrieb auf. Auch ist die Geschwindigkeit, mit der sich der Bauteil entlang der Phasengrenzen bewegen kann, durch Strömungseffekte beschränkt.

Die EP 2 505 341 A1 offenbart eine Technik zum schichtweisen Aufbau eines Objekts aus einem fotopolymerisierbaren Material, wobei ein längliches Element, insbesondere ein Stab oder ein Draht, durch das fotopolymerisierbare Material bewegt wird. Dieses Element hat nur eine Misch-Funktion.

Die US 2015/0034007 A1 zeigt eine Vorrichtung zur Herstellung eines dreidimensionalen Bauteils durch Aushärten eines fotosensitiven Materials. Die Vorrichtung weist einen semipermeablen Film oberhalb eines Wannenbodens auf, zur Bildung einer Luftkammer. Ein Transport des Films oder einer Schicht oberhalb des Films ist nicht offenbart.

Die EP 2 505 341 A1 zeigt ein Verfahren zum schichtweisen Aufbau eines Formkörpers aus hochviskosem photopolymerisierbarem Material. Dabei ist ein von oben in das photopolymerisierbare Material eingetauchtes Mischelement in Form einer Rakel vorgesehen.

Die bekannten Techniken haben u.a. den Nachteil, dass bei der nicht-kontinuierlichen Generierung eines Bauteiles, abhängig von der geometrischen Schichtinformation, ein Eindruckkissen in der Trägerphase entsteht, welches zu einer Verzerrung bzw. zu einem sich akkumulierenden Fehler im Bauteil führt. Auch muss die untere Trägerphase eine höhere Dichte als die darüber geschichtete fotosensitive Substanz aufweisen. Des Weiteren ist die Prozessgeschwindigkeit durch den an der Phasengrenze beweglichen Bauteil im nicht-kontinuierlichen Betrieb beschränkt. Auch ist der Werkstoff, aus dem der Bauteil besteht, welcher sich an den Phasengrenzen bewegt, durch die chemischen Eigenschaften der beiden Phasen eingeschränkt (Korrosion). Überdies ist die Reinigung des Bauteils sowie der Wanne sehr aufwendig. Die Prozessstabilität bei direktem Kontakt zweier Phasen führt über die gesamte Prozesszeit zu unerwünschten Effekten, wie zum Beispiel zu Einschlüssen der Trägerphase in der ausgehärteten Bauteilschicht sowie zu einer Querschnitts-abhängigen Bauteilqualität.

Die Erfindung hat zum Ziel, eine Anlage wie eingangs angeführt zu schaffen, bei der die zuvor genannten Nachteile behoben werden, und mit der ein einfacheres, schnelleres, exaktes, kontinuierliches und/oder nicht-kontinuierliches und wirtschaftliches Generieren von dreidimensionalen Körpern, auch bei geringen Schichtdicken und großen Belichtungsflächen, ermöglicht wird. Insbesondere soll das Problem des Transports von neuer fotosensitiver Substanz in den Spalt, das durch das Abheben der zuletzt gebildeten Schicht erzeugt wird, gelöst werden und dabei die Anlage geeignet sein, zwischen einem kontinuierlichen Prozess und einem nicht-kontinuierlichen Prozess beliebig zu wechseln, wobei auch eine Steigerung der Wirtschaftlichkeit des Systems erzielt werden soll.

Die erfindungsgemäße Anlage der eingangs angeführten Art ist demgemäß dadurch gekennzeichnet, dass die semipermeable Schicht zumindest einen Mitnehmer in Form einer geometrischen Erhöhung aufweist, wobei sich der Mitnehmer zumindest von der semipermeablen Schicht in Richtung Bauplattform erstreckt und relativ zum Wannenboden bewegbar ist, für eine Transportwirkung zur Nachförderung der fotoreaktiven Substanz durch eine induzierte Strömung in den Spalt zwischen der Bauplattform und der semipermeablen Schicht.

Vorteilhafte Ausführungsformen bzw. Weiterbildungen sind in den abhängigen Ansprüchen angegeben.

Bei der vorliegenden Stereolithographie-Anlage ist eine semipermeable Schicht (wie zum Beispiel eine Folie) vorgesehen, die es ermöglicht, dass die unterhalb der semipermeablen Schicht befindliche chemische Phase, die sich je nach eingesetzter Phase in verschiedenen Aggregatzuständen (gasförmig oder flüssig) befinden kann, durch die semipermeable Schicht diffundieren kann, um mit der über der semipermeablen Schicht angeordneten fotosensitiven Substanz in Wechselwirkung zu treten. Dabei bildet sich beispielsweise durch Sauerstoff-Inhibierung eine dünne Schicht innerhalb der fotosensitiven Substanz aus, welche eine andere Foto-Reaktivität als die restliche fotosensitive Substanz aufweist.

Durch die semipermeable Schicht wird auch eine Transport-Fähigkeit geschaffen, so dass neue fotoreaktive Substanz in den zwischen der semipermeablen Schicht und der zuletzt gebildeten Bauteilschicht gebildeten Spalt gefördert werden kann. Dies wird insbesondere durch eine geometrische Mitnehmer-Ausprägung der semipermeablen Schicht ermöglicht, wobei diese Ausprägung durch die Folie selbst, durch zumindest eine geometrische Erhöhung, welche an der semipermeablen Schicht angebracht ist, durch ein unter bzw. ober der semipermeablen Schicht befindliches bewegliches Element, oder durch eine gesteuerte Verformung der Folie beispielswiese durch Schwingung oder Unterdruck realisiert werden kann. Auch kann die gewünschte Transport-Wirkung durch eine Kombination der hier beschriebenen Mitnehmer-Ausbildungen erfolgen. Beispielsweise kann der Transport von fotoreaktiver Flüssigkeit durch eine relative Bewegung bzw. durch eine bewegliche Wölbung der semipermeablen Schicht ermöglicht werden. Bevorzugt befindet sich die semipermeable Schicht in einem gespannten Zustand, der sicherstellt, dass eine glatte Bauteiloberfläche erzeugt werden kann.

Die semipermeable Schicht kann entweder direkt einen Boden der Wanne bilden, oder es kann ein zusätzlicher, zumindest teilweise lichtdurchlässiger Boden vorgesehen sein. Die Wanne dient zur Aufnahme und/oder Wechselwirkung von zumindest einer fotoreaktiven Substanz und einer zumindest teilweise lichtdurchlässigen, nicht fotoreaktiven Phase. Insbesondere befindet sich die semipermeable Schicht innerhalb der Wanne bzw. ist diese Schicht mehrheitlich in Kontakt mit der fotosensitiven Flüssigkeit. Zumindest eine Seite der semipermeablen Schicht kann mit einer chemischen Substanz zumindest teilweise in Kontakt treten; bevorzugt treten beide Seiten der semipermeablen Schicht mit unterschiedlichen chemischen Phasen in Kontakt.

Die Wanne kann Öffnungen haben, durch welche die semipermeable Schicht läuft, wobei die Öffnungen so gestaltet sind, dass im Wesentlichen keine fotoreaktive Substanz, andere Flüssigkeiten oder Gase austreten können. Diese Anordnung erlaubt eine Bewegung der semipermeablen Schicht relativ zur Wanne und/oder Bauteilschicht, wobei sich der Antrieb (bzw. Teile davon) nicht in Kontakt mit der fotoreaktiven Substanz oder dergl. befindet und auch außerhalb der Wannenanordnung vorliegen kann. Die Wanne kann über mehrere Kammern oder Bereiche verfügen, die ermöglichen, dass unterschiedliche Phasen mit der semipermeablen Schicht in Wechselwirkung treten und eine Bewegung der semipermeablen Schicht, bei gleichzeitiger Wechselwirkung (Diffusion), in einfacher, kompakter und modularer Weise erlaubt wird.

Die Anreicherung bzw. Diffusion der semipermeablen Schicht, zur Ausbildung einer fotochemisch inaktiven Zwischenschicht in der fotoreaktiven Substanz, kann auch außerhalb des Bereiches, in dem die semipermeable Schicht in Kontakt mit der lichtaushärtenden Substanz steht, besonders bevorzugt in dem Bereich, wo die semipermeable Schicht in Kontakt mit der fotosensitiven Substanz steht, erfolgen.

Mit Hilfe der bzw. durch die semipermeable Schicht wird eine geometrische Form geschaffen, welche eine geometrische Mitnehmer-Erhöhung schafft, die sich zum Beispiel im Bereich der Schichtdicke des Bauteiles oder darunter befindet, jedoch so ausgestaltet ist, dass sie, wie erwähnt, eine Transport-Möglichkeit für die fotoreaktive Substanz erlaubt. Bevorzugt kann die geometrische Erhöhung automatisch durch eine Steuereinheit auf eine optimale Höhe eingestellt werden, welche sich zum Beispiel aus Prozessparametern, wie Schichtdicke, Transport-Geschwindigkeit, Viskosität der fotoreaktiven Substanz und dergl., ergibt. Dadurch wird eine effiziente und intelligente Förderung der fotoreaktiven Substanz ermöglicht, wobei die fotoreaktive Substanz auch pastös sein kann.

Die Sicherstellung des Transportes der fotosensitiven Substanz kann dabei in jeder beschriebenen Variante durch zumindest einen gesamten Durchlauf der geometrischen Erhöhung erfolgen.

Die Erfindung wird nachstehend anhand von in der Zeichnung dargestellten bevorzugten Ausführungsbeispielen, auf die sie jedoch nicht beschränkt sein soll, noch weiter erläutert. Es zeigen:
Fig. 1 eine Anlage in einer schematischen Ansicht;
Fig. 1a ein Detail dieser Anlage;
Fig. 1b eine mögliche Ausführungsform einer geometrischen Mitnehmer-Erhöhung zum Transport von fotoreaktiver Substanz in einer Detailansicht;
Fig. 2a bis Fig. 2d die Funktionsweise der Anlage von Fig. 1 anhand von schematischen Teilansichten, welche zum Zwecke des Verständnisses auf einen relevanten Ausschnitt begrenzt sind und verschiedene Verfahrensstadien a) bis d) veranschaulichen;
Fig. 3a, 3b, 3c, 3d die Funktionsweise einer zweiten Ausführungsform der Anlage in verschiedenen Stadien;

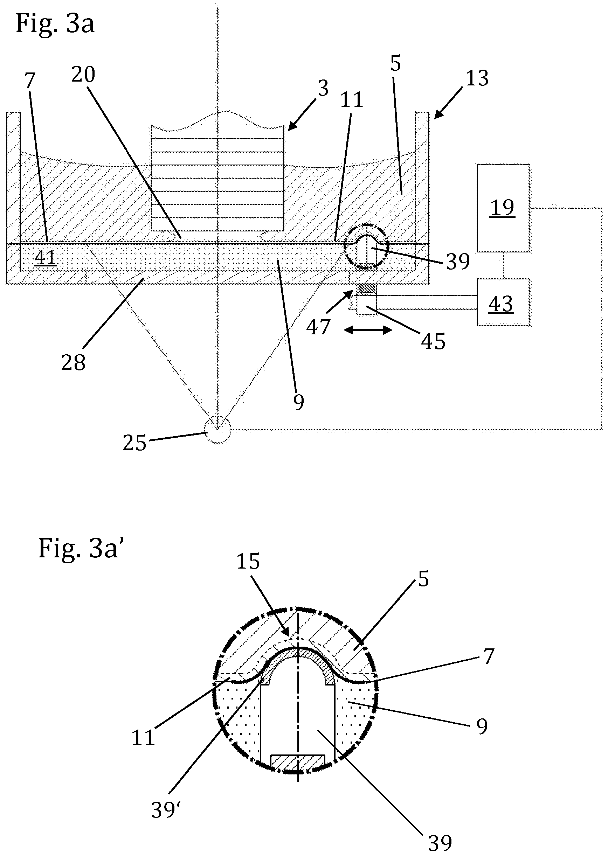

Fig. 3a' eine ausschnittsweise Detailansicht der Fig. 3a;

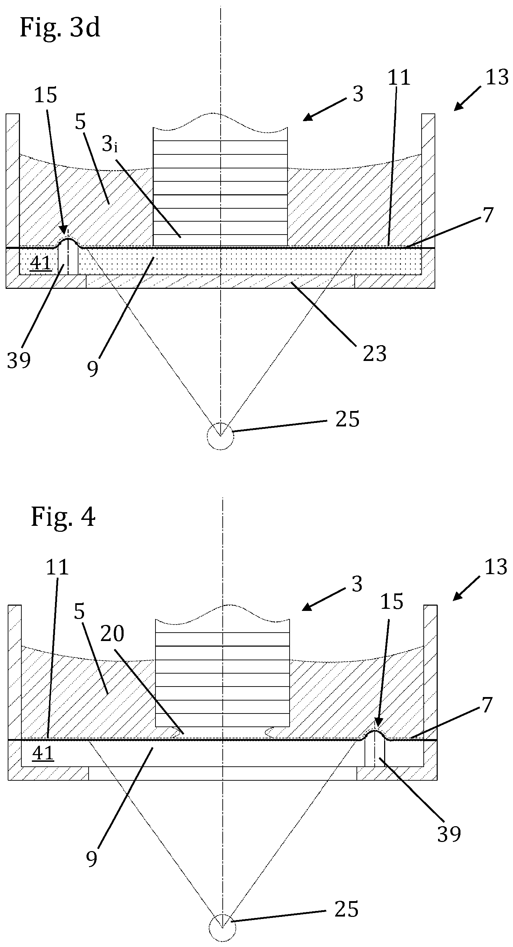

Fig. 4 ein weiteres Ausführungsbeispiel der Erfindung, mit einer modifizierten Transporterhöhung, die überdies sowohl in der ersten als auch der zweiten Ausführungsform verwirklicht werden kann;

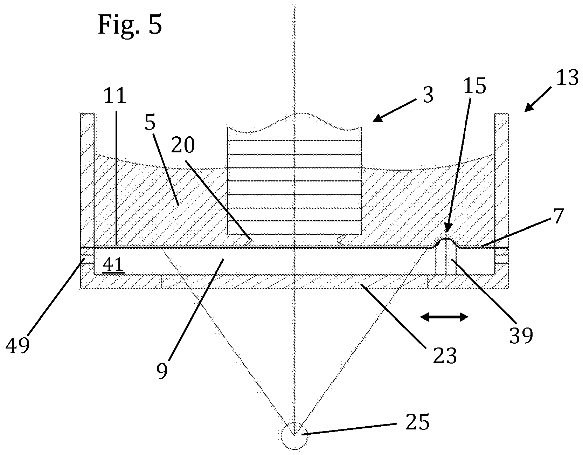

Fig. 5 ein gegenüber Fig. 4 abgeändertes Ausführungsbeispiel, das jedoch in jeder Ausführungsform der Erfindung zum Einsatz kommen kann;

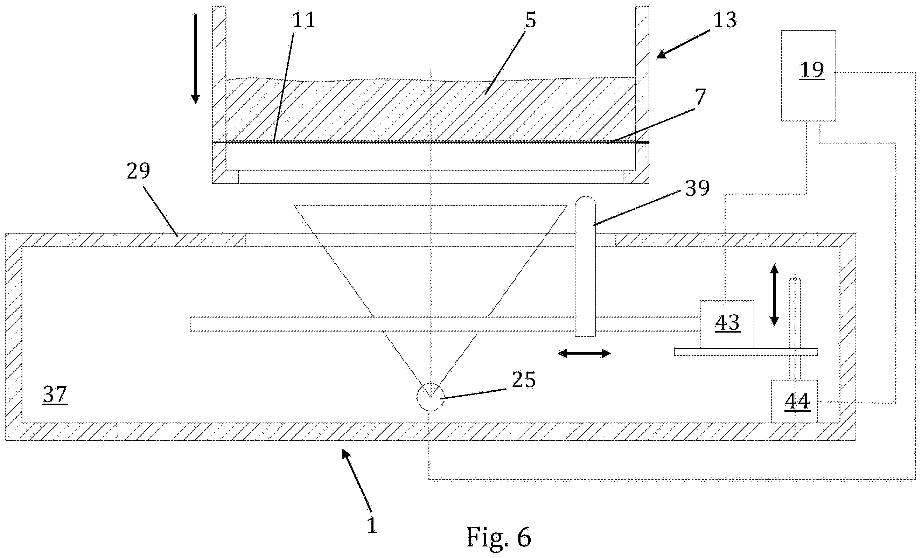

Fig. 6 eine mögliche Variante der Erfindung, in der das Transportelement Teil der Anlage ist; und

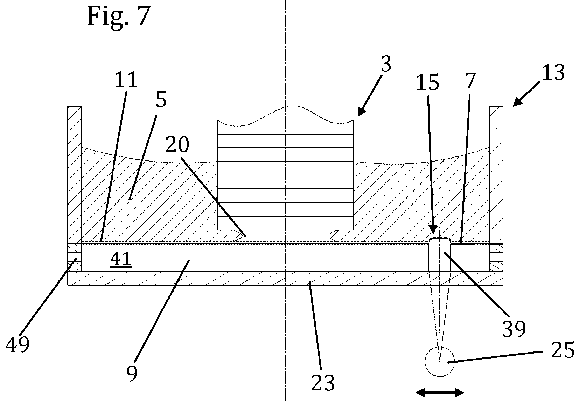

Fig. 7 noch eine andere Ausführungsform der Erfindung, in der eine bewegbare Lichtquelle vorgesehen und das Transportelement für die Strahlung durchlässig gestaltet ist.

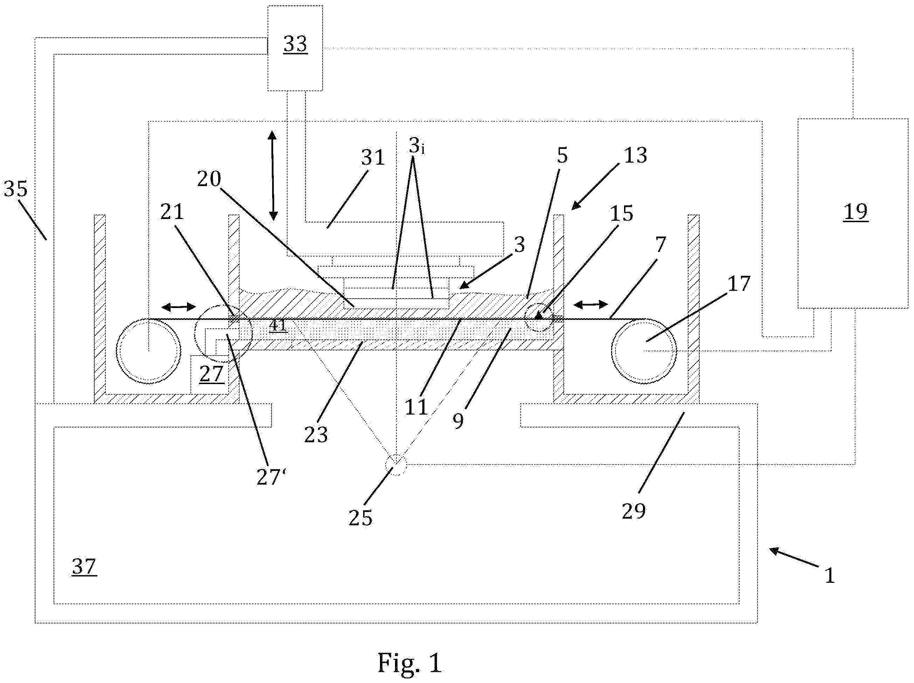

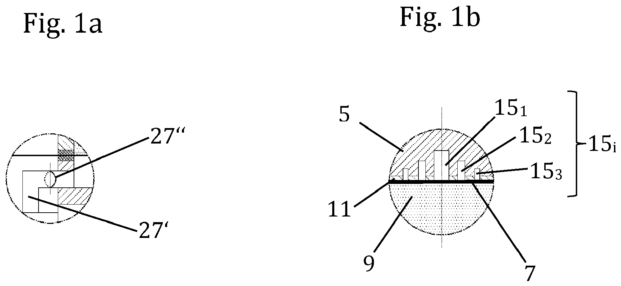

Fig. 1 zeigt eine Anlage 1 zum Erzeugen, d.h. Aufbau, eines dreidimensionalen Bauteils bzw. Körpers 3 durch sog. "Rapid Prototyping". Der Körper 3 kann aus einzelnen Schichten 3ᵢ, mit i= 1, 2, 3 ..., diskontinuierlich oder kontinuierlich aus einer fotoreaktiven Substanz 5 erzeugt werden. Die fotoreaktive Substanz 5 ist durch Bestrahlung mit Licht, z.B. UV-Licht, aushärtbar. Dabei wird hier unter dem Begriff "Licht" jede Art von elektromagnetischer Strahlung verstanden, die zur Aushärtung der jeweiligen Substanz 5 geeignet ist. Die fotoreaktive Substanz 5 ist z.B. im Wesentlichen "flüssig", wobei unter diesem Begriff auch eine pastöse Konsistenz mit einer beliebigen Viskosität verstanden wird.

Die fotoreaktive Substanz 5 steht zumindest teilweise in Kontakt mit einer semipermeablen Schicht oder Lage 7, welche ihrerseits zumindest teilweise in Kontakt mit einer zweiten Phase 9 steht. Dabei werden unter dem Begriff "Phase" chemische Zusammensetzungen beliebigen Aggregatzustandes verstanden, also auch Gase, z.B. Sauerstoff, Luft, abgesehen von Flüssigkeiten, z.B. Wasser oder Silikonöl, von beliebiger Konsistenz, die zumindest teilweise für die Strahlung zum Härten der fotoreaktiven Substanz 5 durchlässig bzw. durchscheinend sind.

Die semipermeable Schicht 7 ist zumindest teilweise für die Phase 9 durchlässig, z.B. durch Diffusion von Sauerstoff, tritt dabei mit dieser Phase 9 in Wechselwirkung und führt zur Bildung einer Zwischenphase 11 in der fotoreaktiven Substanz 5, welche eine zumindest eingeschränkte bis gar keine Reaktivität mehr aufweist und so durch die einfallende Strahlung nicht ausgehärtet wird. Die semipermeable Schicht 7 bildet die Referenzfläche für den Stereolithographie-Prozess, über der sich die durch Diffusion der Phase 9 (z.B. Luft) durch die Schicht 7 innerhalb der fotoreaktiven Substanz 5 gebildete Zwischenphase befindet. Die semipermeable Schicht 7 ist dabei zumindest so gespannt, dass sie die Bildung eines Eindruckkissens bzw. einer Verformung/Verdrängung der unteren chemischen Phase 9 durch die Flüssigkeitsmasse der fotoreaktiven Substanz 5 und damit die Ausbildung von Ungenauigkeiten, durch beispielsweise einen Durchhang der semipermeablen Schicht 7 (Referenzfläche), verhindert. Die semipermeable Schicht 7 ist ebenfalls zumindest teilweise für die zur Aushärtung der fotoreaktiven Substanz 5 notwendigen Strahlung durchlässig bzw. transparent und kann beispielsweise durch eine transparente Folie gebildet sein. Die semipermeable Schicht 7 kann auch zur Sicherstellung des Transportes von neuer fotoreaktiver Substanz 5 zwischen der zuletzt gebildeten Bauteilschicht 3ᵢ₋₁ und der semipermeablen Schicht 7 bzw. zur Bereitstellung einer neuen Zwischenphase 11 vorgesehen sein. Eine Anreicherung der semipermeablen Schicht 7 mit einer Phase 9 zur Ausbildung einer Zwischenphase 11 kann auch bei keinem Kontakt mit der fotoreaktiven Substanz 5 erfolgen. Dies kann beispielsweise durch eine relative Bewegung der zumindest teilweise gespannten semipermeablen Schicht 7 gegenüber der Wanne 13 oder dem Bauteil 3 erfolgen.

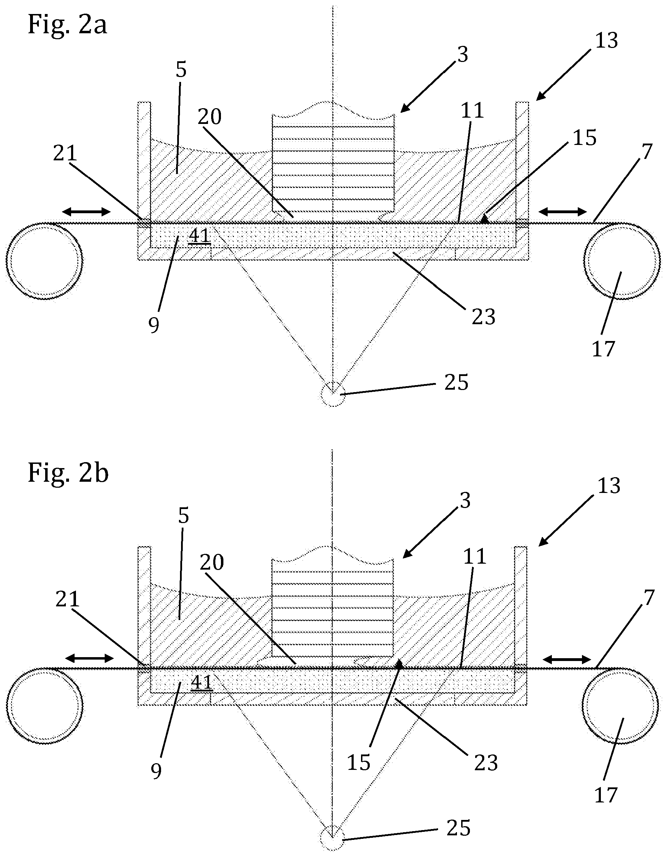

Die semipermeable Schicht 7 weist eine geometrische Erhöhung, allgemein einen Mitnehmer 15 auf, die bzw. der den Transport der fotoreaktiven Flüssigkeit 5 begünstigt. Über beispielsweise zwei Rollen 17, welche in der Lage sind, die semipermeable Schicht 7 zu spannen bzw. aufzunehmen, wird durch die Vorgabe der Drehrichtung von einer Maschinensteuerung bzw. Steuereinheit 19 das Spannen und/oder Verstellen der semipermeablen Schicht 7 ermöglicht, s. Doppelpfeile in Fig. 1 und Fig. 2a bis Fig. 2d. Durch Dichtelemente 21 wird das Austreten von Substanz aus der Wanne 13 verhindert bzw. auch ein Abstreifen der semipermeablen Schicht 7 beim Austreten ermöglicht.

Es ist auch der Einsatz einer flüssigen Phase 9, abgesehen von einer gasförmigen Phase 9, möglich, und die Wanne 13 weist eine lichtdurchlässige Bodenplatte 23 auf, unterhalb von der sich eine bewegliche und steuerbare Lichtquelle 25 befindet, die die zur Aushärtung der fotoreaktiven Substanz 5 notwendige Strahlung liefert. Die Lichtquelle 25 kann beispielsweise eine digitale Masken-Projektionseinrichtung sein, die mit Hilfe eines DLP-Chips und einer LED als Strahlungsquelle den jeweiligen Bauteilquerschnitt pixelgenau belichten kann.

In der in Fig. 1 dargestellten Anlage kann zu einem beliebigen Zeitpunkt die Phase 9 über eine Pumpeinrichtung 27 mit Hilfe einer Leitung 27' in die Wanne 13 gefördert werden. Dabei kann die Pumpeinrichtung 27 so ausgestaltet sein, dass sie in der Lage ist, eine Oszillation der semipermeablen Schicht 7, z.B. durch zeitliche Variation des Volumenstromes der Phase 9, zu ermöglichen, um somit durch eine so verursachte Schwingung der semipermeablen Schicht 7 eine (weitere) Transportwirkung für die fotoreaktive Substanz 5 hervorzurufen. Eine Oszillation der Phase 9 kann beispielsweise wie in Fig. 1a skizziert auch durch eine Membran 27" in der Leitung 27' bzw. in der Pumpeinrichtung 27 bewirkt werden.

Über der Wanne 13, welche auf einem Trägerelement 29 aufliegt (s. Fig. 1) oder Teil von diesem ist, befindet sich eine Bauplattform 31, welche mit einem Antrieb 33 gekoppelt ist, der beispielsweise durch einen Rahmen 35 mit der Anlage 1 verbunden und in der Lage ist, die gebildeten Bauteilschichten 3_{1,} 3₂, usw. zu tragen, und der relativ zur Wanne 13 anhebbar und absenkbar ist. Die Steuereinheit 19 ermöglicht in ihrem Funktionsumfang diverse Steuerungs- und Regelaufgaben, wie beispielsweise das Anheben und das Absenken der Bauplattform 31, das Bewegen der Lichtquelle 25 im Maschinenraum 37 und die Steuerung des Energieeintrages durch die Lichtquelle 25, die Spannung sowie das Bewegen der semipermeablen Schicht 7 usw.

Die Bauplattform 31 ist im Wesentlichen so gestaltet, dass sie eine plane Ebene zum Anhaften der Bauteilschichten 3i vorsieht; dabei kann die Bauplattform 31 aber auch geometrische Ausprägungen bzw. Strukturen aufweisen, welche das Anhaften der Substanz 5 bzw. der (obersten) Bauteilschicht(en) begünstigen und gleichzeitig die Verdrängung der fotoreaktiven Substanz 5 minimieren.

Ist die Bauplattform 31 in die fotoreaktive Substanz 5 eingetaucht und befindet sie sich um einen Wert der Schichtdicke (z.B. 100 Mikrometer) über der Zwischenphase 11 und/oder über der semipermeablen Schicht 7, wird die Lichtquelle 25 - vorzugsweise automatisch über die Steuereinheit 19 - aktiviert. Die Bauplattform 31 kann kontinuierlich nach oben bewegt werden, und sie ist mit der Lichtquelle 25 durch die Steuerung 19 in einer Art und Weise gekoppelt, dass ein kontinuierlicher Bauprozess, abhängig von der Querschnittsfläche des Bauteiles 3, ermöglicht wird. Sollte der Querschnitt des Bauteiles 3 eine Größe bzw. Fläche aufweisen, welche ungünstig für einen kontinuierlichen Bauprozess ist, so wird dies aus den Schichtdaten durch die Steuerung 19 erkannt, und es wird ein diskontinuierlicher Bauprozess eingeleitet, wobei - zur Sicherstellung des Transports der fotoreaktiven Substanz 5 - die semipermeable Schicht 7 bewegt wird. Die Steuerung 19 kann aus den bekannten Querschnittsdaten der Schichten 3i, welche zum Beispiel in Form mehrerer pixelbasierter Bilder vorliegen, die Querschnittsflächen bestimmen. Dies wird beispielsweise durch Zählen der für den zu erzeugenden Querschnitt des Körpers bzw. Bauteils 3 notwendigen Pixel (z.B. weiße Pixel in einem schwarzweißen Bild) erreicht.

Die Lichtquelle 25 ist dafür ausgelegt, einen kontinuierlichen Bauprozess zu ermöglichen, beispielsweise durch Einsatz einer pixelgesteuerten Lichtquelle, wie z.B. eines DLP-Projektors, der in der Lage ist, einen gesamten Flächenbereich auf einmal zu belichten. Dabei wird bereichsweise und selektiv die gewünschte Bauteilschicht 3i durch Verfestigung der fotoreaktiven Substanz 5 gebildet.

Die geometrische Erhöhung bzw. der Mitnehmer 15 für den - horizontalen - Transport der fotoreaktiven Substanz 5 begünstigt, kann auch aus einem anderen Material als dem der semipermeablen Schicht 7 bestehen und ein- oder mehrteilig aufgebaut sein. Die zumindest eine, z.B. stabförmige geometrische Mitnehmer-Erhöhung 15 kann auch eine andere als die in der Fig.1 gezeigte dreiecksförmige Gestalt aufweisen. Beispielsweise kann die Erhöhung 15 auch einen rechteckigen Querschnitt aufweisen, oder wie in Fig. 1b dargestellt können auch mehrere geometrischen Erhöhungen 15₁,15₂,15₃, ... usw. zusammengefasst als 15ᵢ, hintereinandergeschaltet, ggf. mehrteilig und/oder stufenweise ausgeführt werden. Bevorzugt können auch verschiedene geometrische Grundformen zur Erzeugung der geometrischen Erhöhung 15ᵢ bzw. 15 zugrunde gelegt werden.

Der Boden 23 der Wanne 13 kann selbst eine gewisse Permeabilität für die Phase 9 (beispielsweise Sauerstoff) aufweisen, um so die Ausbildung der Zwischenphase 11 zu begünstigen, wobei gleichzeitig eine Schutzfunktion beim Versagen der semipermeablen Schicht 7 ermöglicht wird.

Die Fig. 2a bis Fig. 2d zeigen ausschnittsweise anhand der bereits gemäß Fig. 1 beschriebenen Anlage Varianten bzw. verschiedene Verfahrensstadien. In Fig. 2a befindet sich die Anlage 1 in einer Stellung, in der die zuletzt gebildete Schicht 3ᵢ um den Wert der neu zu erstellenden Schichtdicke angehoben ist. Der Bauteil 3 weist einen Querschnitt auf, der nicht mehr ohne aktiven Transport von fotoreaktiver Substanz 5 in den gebildeten Spalt 20 herstellbar ist. Gemäß Fig. 2b wird durch die Bewegung der semipermeablen Schicht 7, der geometrischen Mitnehmer-Erhöhung 15 sowie der Zwischenphase 11 gegenüber der Wanne 13 eine Strömung induziert, welche neue fotoreaktive Substanz 5 in den Spalt 20 fördert. Dieser Verfahrensschritt wird zumindest einmal ausgeführt.

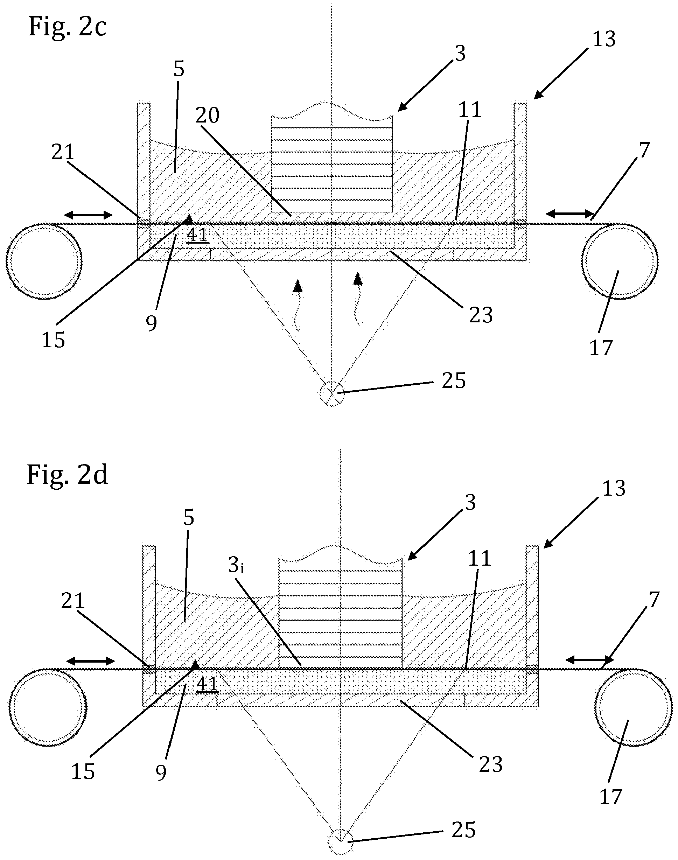

In Fig. 2c ist der Transportprozess bereits abgeschlossen, der Spalt 20 ist vollständig mit fotoreaktiver Substanz 5 gefüllt und ein erneuter Belichtungsprozess kann erfolgen, der zur Ausbildung der nächsten Bauteilschicht 3ᵢ führt.

In Fig. 2d ist die fertige Bauteilschicht 3ᵢ dargestellt, und es erfolgt nachfolgend ein Anheben des Bauteiles 3 durch die Bauplattform 31 um die gewünschte Schichtdicke, und der Prozess beginnt erneut.

Fig. 3a bis Fig. 3c zeigen eine Ausführungsform der Anlage, in der die semipermeable Schicht 7 (z.B. Folie) durch ein Mitnehmer-Druckelement 39, welches sich beispielsweise unterhalb der semipermeablen Schicht 7 innerhalb einer Wannenkammer 41 befinden kann, darin gespannt und verformt wird, wobei das Druckelement 39 innerhalb der Phase 9 zumindest in einer Richtung bewegt werden kann und durch Ausbildung der geometrischen Druckelement-Erhöhung 15 in der Lage ist, einen horizontalen Transport der fotoreaktiven Substanz 5 zu ermöglichen. Dies geschieht beispielsweise wie in Fig. 3a schematisch dargestellt durch einen motorisierten Linearantrieb 43, der über eine Aufnahme 45 verfügt, die beispielsweise über eine magnetische Kopplung 47 das Druckelement 39 mit der Linearachse 43 koppelt, wobei die Steuerung durch die Steuereinheit 19 erfolgt. Dabei kann das Druckelement 39 innerhalb der Kammer 41 oder aber auch außerhalb geführt und in der Höhe verstellt werden (s. auch Fig. 6), um die geometrische Erhöhung 15 der semipermeablen Schicht 7 zu beeinflussen, und es liegt bevorzugt zumindest ein solches Druckelement 39 vor. Das Druckelement 39 hat eine z.B. im Wesentlichen stabförmige Gestalt, welche zumindest eine beliebige stabförmige Querschnitts-Geometrie (z.B. rund, rechteckig, U-förmig usw.) hat. In der Folge können auch unterschiedliche Schichtdicken und das Nachfördern von neuer fotoreaktiver Substanz 5 durch Einstellen der geometrischen Erhöhung 15 realisiert bzw. ermöglicht werden. Dabei wird die geometrische Erhöhung 15 durch direktes oder indirektes Anliegen der semipermeablen Schicht 7 an dem Druckelement 39 erzeugt; insbesondere kann zwischen der semipermeablen Schicht 7 und dem Druckelement 39 noch eine elastische Zwischenschicht 39' (siehe Fig. 3a') angeordnet werden. Bevorzugt wird die geometrische Erhöhung 15 durch einen mehrteiligen Aufbau des Druckelements 39 gebildet und durch beispielsweise die Position von mehreren Druckelementen (beispielsweise Winkel und Abstand zueinander) beeinflusst. Zum Beispiel können zwei im Wesentlichen rechteckige, stabförmige Druckelemente unter der semipermeablen Schicht 7 in einem Abstand und Winkel zueinander positioniert werden; durch den Abstand der Druckelemente kann die Breite der geometrischen Erhöhung 15 beeinflusst werden und durch den Winkel der stabförmigen Druckelemente die Höhe der geometrischen Erhöhung 15; es ergibt sich beispielsweise eine rampenförmige geometrische Erhöhung. Je nach Bewegungsrichtung kann beispielweise die Ausrichtung der geometrischen Erhöhung durch Änderung der Winkel der Druckelemente eingestellt werden.

Fig. 3a bis Fig. 3d zeigen aufeinander folgende Prozessschritte einer beispielhaften Ausführung der Anlage, welche zur Erzeugung der geometrischen Erhöhung 15 der semipermeablen Schicht 7 ein Druckelement 39 nutzt, welches sich unter der semipermeablen Schicht 7 befindet, relativ zu dieser beweglich ist und eine Transportwirkung für die fotoreaktive Substanz 5 in den Spalt 20 unter den Körper 3 ermöglicht. Die semipermeable Schicht 7 ist durch die Anordnung in der Wanne 13 zumindest teilweise gespannt, und das Druckelement 39 kann die Spannung der semipermeablen Schicht 7 durch die geometrische Form und Höhe unterstützen.

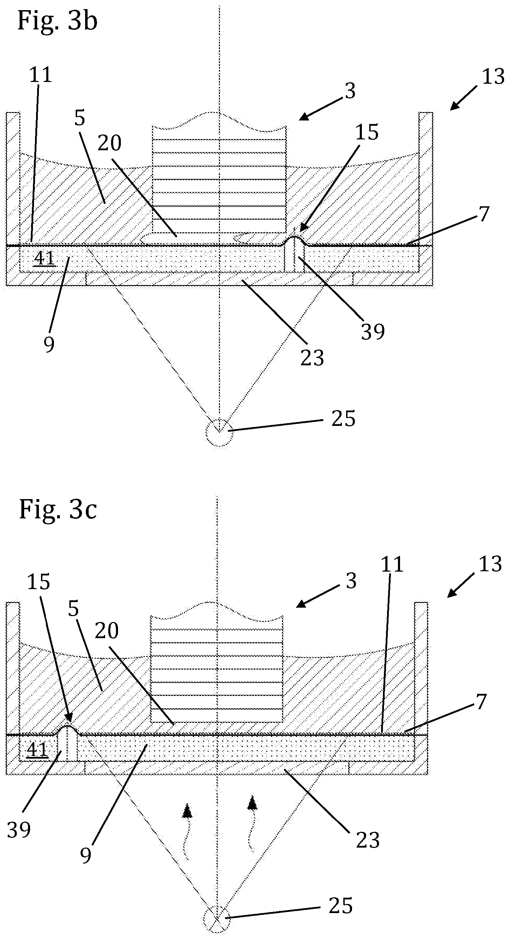

Wie in Fig. 3b gezeigt kommt es durch die Bewegung des Druckelements 39 bzw. die Bewegung der geometrischen Erhöhung 15 zu einer Transportwirkung bei einer im Wesentlichen stationären Zwischenphase 11. In Fig. 3c ist der Transportprozess bereits abgeschlossen, der Belichtungsprozess wird eingeleitet, und es wird eine neue Bauteilschicht 3ᵢ, wie in Fig. 3d dargestellt, gebildet. Nach der in Fig. 3d dargestellten Prozessphase kommt es zu einem Anheben der soeben erzeugten Bauteilschicht 3ᵢ gegenüber der Wanne 13, und der beschriebene Prozess wird erneut durchlaufen.

Fig. 4 zeigt eine modifizierte Ausführungsform der in Fig. 3a und Fig. 3c gezeigten Anlage, wobei sich kein (zusätzlicher) transparenter Boden 23 unterhalb der semipermeablen Schicht 7 befindet; damit kann eine einfachere Diffusion der Phase 9 (beispielsweise Luft oder Sauerstoff) ermöglicht werden, bei gleichzeitiger Ausbildung der geometrischen Erhöhung 15 in der semipermeablen Schicht 7 durch das Druckelement 39, das hier in einer nicht näher gezeigten Führung über den teilweise offenen Boden (23 in Fig. 3d) gleitet.

Fig. 5 zeigt eine weitere Variante, wobei sich beispielsweise an den Seitenflächen einer unteren Kammer 41 Öffnungen 49 befinden, durch welche die Phase 9, (z.B. Sauerstoff oder Luft), einströmen und ausströmen kann, wobei der transparente Boden 23 nicht semipermeabel sein muss und das Druckelement 39 innerhalb der Kammer 41 geführt wird. Dabei kann das Druckelement 39 zum Beispiel wie in Fig. 3a dargestellt durch eine magnetische Kopplung mit dem Antrieb gekoppelt werden.

In einer weiteren Ausführungsform kann der Antrieb durch direkte mechanische Kopplung des Druckelements 39, beispielsweise durch Schlitze in der Bodenplatte 23 (nicht gezeigt), oder durch Weglassen der Bodenplatte 23 (s. Fig. 6) erfolgen.

Wie in Fig. 6 dargestellt kann die - dort abgehoben gezeigte - Wanne 13 auch mehrteilig aufgebaut und das Druckelement 39 bereits Teil der Anlage 1 sein. Das Druckelement 39 kann beispielsweise durch einen zusätzlichen Antrieb 44, der sich im Maschinenraum 37 befindet und beispielsweise mit einer Lineareinheit 43 gekoppelt ist, in der Höhe verstellt werden. Durch Aufsetzen der Wanne 13 auf das Trägerelement 29 wird die semipermeable Schicht 7 verformt, und es kommt zur Ausbildung der geometrischen Erhöhung 15, etwa ähnlich Fig. 5.

Eine weitere Variante zeigt Fig. 7. Hier ist das - transparente - Druckelement 39 mit der Lichtquelle 25 in der Art gekoppelt, dass eine Belichtung beispielsweise auch simultan mit der Bewegung des Druckelements 39 erfolgen kann und es zu einer kontinuierlichen Belichtung kommt, wobei überdies ein Vorlaufen des Druckelements 39 gegenüber der Lichtquelle 25 möglich ist (so dass die Lichtquelle hier nicht durch das Druckelement hindurch belichtet, sondern parallel versetzt dazu belichten kann). Dabei wird die von der Lichtquelle 25 generierte Querschnitts-Information, beispielsweise durch eine digitale pixelbasierte Maske oder durch einen Laserscanner (wie zum Beispiel einem Galvanoscanner, oder einen Laserscanner mit rotierendem Polygon-Spiegelrad), entsprechend der Position und der Verfahrgeschwindigkeit des Druckelements 39 und der dazu korrespondierenden Querschnitts-Information geändert. Solche simultanen Belichtungsverfahren sind an sich unter dem Begriff "Scrolling" bekannt. Dabei wird von der Steuereinrichtung 19 die entsprechende Information zur Belichtung des aktuellen Teilabschnittes, ausgehend von der gesamten bekannten Querschnitts-Information, bereitgestellt sowie die Position und die Verfahrgeschwindigkeit des Druckelements 39 mit der Lichtquelle 25 entsprechend abgeglichen. Das Druckelement 39 ist bevorzugt aus einem Material gefertigt, welches zumindest teilweise durchlässig für die von der Lichtquelle 25 erzeugte Strahlung ist. Besonders bevorzugt kann dabei die Belichtung durch die Geometrie des Druckelements 39 positiv beeinflusst werden.

## Patentansprüche

1. Anlage (1) zum Aufbau eines Bauteils, enthaltend eine Wanne (13) mit einem zumindest teilweise transparenten Boden (23), einer zumindest teilweise spannbaren semipermeablen Schicht (7), zur Aufnahme einer fotosensitiven Substanz (5), und einer unter der semipermeablen Schicht (7) angeordneten Phase (9), die in der Lage ist, innerhalb der fotosensitiven Substanz (5) eine Zwischenschicht (11) zu bilden, eine unter dem Wannenboden (23) angeordnete Lichtquelle (25) zur bereichsweisen Aushärtung der fotoreaktiven Substanz (5), sowie eine über der semipermeablen Schicht (7) angeordnete und gegenüber dieser heb- und senkbaren Bauplattform (31) zur Aufnahme des Bauteils (3) bzw. der einzelnen Bauteilschichten (3ᵢ), **dadurch gekennzeichnet, dass** die semipermeable Schicht zumindest einen Mitnehmer (15) in Form einer geometrischen Erhöhung aufweist, wobei sich der Mitnehmer (15) zumindest von der semipermeablen Schicht (7) in Richtung Bauplattform (31) erstreckt und relativ zum Wannenboden (23) bewegbar ist, für eine Transportwirkung zur Nachförderung der fotoreaktiven Substanz (5) durch eine induzierte Strömung in den Spalt (20) zwischen der Bauplattform (31) und der semipermeablen Schicht (7) .

2. Anlage nach Anspruch 1, **dadurch gekennzeichnet, dass** die Höhe und/oder Form der geometrischen Erhöhung (15) einstellbar ist/sind.

3. Anlage nach einem der Ansprüche 1 oder 2, **dadurch gekennzeichnet, dass** die semipermeable Schicht (7) zur Bildung einer Zwischenschicht bzw. -phase (11) innerhalb einer fotoreaktiven Substanz (5) durch Wechselwirkung mit einer unterhalb der semipermeablen Schicht (7) befindlichen Phase (9) eingerichtet ist, wobei ein Mehrphasensystem gebildet und die semipermeable Schicht (7) zumindest teilweise gespannt ist.

4. Anlage nach einem der Ansprüche 1 bis 3, **dadurch gekennzeichnet, dass** die geometrische Erhöhung (15) durch ein Druckelement (39) gebildet ist.

5. Anlage nach einem der Ansprüche 1 bis 4, **dadurch gekennzeichnet, dass** die Phase (9), mit beliebigem(r) Aggregatzustand und Dichte, zumindest teilweise lichtdurchlässig und in der Lage ist, mit der semipermeablen Schicht (7) in Wechselwirkung zu treten, um eine Zwischenphase (11) auszubilden.

6. Anlage nach einem der Ansprüche 1 bis 5, **dadurch gekennzeichnet, dass** die semipermeable Schicht zum Transport der fotoreaktiven Substanz (5) auslenkbar ist.

7. Anlage nach einem der Ansprüche 1 bis 6, **dadurch gekennzeichnet, dass** der Mitnehmer (15) mit der Lichtquelle (25) simultan bewegbar ist.

8. Anlage nach einem der Ansprüche 1 bis 7, **dadurch gekennzeichnet, dass** der Mitnehmer (15) zumindest teilweise lichtdurchlässig ist.

9. Anlage nach einem der Ansprüche 1 bis 8, **dadurch gekennzeichnet, dass** der Mitnehmer (15) einteilig ausgeführt ist.

10. Anlage nach einem der Ansprüche 1 bis 9, **dadurch gekennzeichnet, dass** der Mitnehmer (15) zum Transport der fotoreaktiven Substanz (5) stabförmig ausgebildet ist.

11. Anlage nach einem der Ansprüche 1 bis 10, **dadurch gekennzeichnet, dass** die semipermeable Schicht (7) flexibel ist, vorzugsweise durch eine Folie gebildet ist.

12. Anlage nach einem der Ansprüche 1 bis 11, **dadurch gekennzeichnet, dass** die semipermeable Schicht (7) durch die Wanne (13) bewegbar ist, vorzugsweise dabei spannbar und fixierbar ist.

## Claims

1. An apparatus (1) for building a component, containing a trough (13) having an at least partially transparent base (23), an at least partially tensionable semipermeable layer (7) for receiving a photosensitive substance (5), and a phase (9) which is arranged under the semipermeable layer (7) and is able to form an intermediate layer (11) within the photosensitive substance (5), a light source (25) arranged under the trough base (23) for curing the photoreactive substance (5) in regions, and a construction platform (31) which is arranged above the semipermeable layer (7) and which can be raised and lowered relative to said layer for receiving the component (3) or the individual component layers (3ᵢ), **characterised in that** the semipermeable layer has at least one driver (15) in the form of a geometric elevation, wherein the driver (15) extends at least from the semipermeable layer (7) in the direction of the construction platform (31) and is moveable relative to the trough base (23), for a transport effect for conveying the photoreactive substance (5) by an induced flow into the gap (20) between the construction platform (31) and the semipermeable layer (7).

2. The apparatus according to claim 1, **characterised in that** the height and/or shape of the geometric elevation (15) is/are adjustable.

3. The apparatus according to any one of claims 1 or 2, **characterised in that** the semipermeable layer (7) is designed to form an intermediate layer or phase (11) within a photoreactive substance (5) by interaction with a phase (9) located below the semipermeable layer (7), wherein a multi-phase system is formed and the semipermeable layer (7) is at least partially tensioned.

4. The apparatus according to any one of claims 1 to 3, **characterised in that** the geometric elevation (15) is formed by a pressure element (39).

5. The apparatus according to any one of claims 1 to 4, **characterised in that** the phase (9), with any aggregate state and density, is at least partially translucent and able to interact with the semipermeable layer (7) in order to form an intermediate phase (11).

6. The apparatus according to any one of claims 1 to 5, **characterised in that** the semipermeable layer can be deflected for transporting the photoreactive substance (5).

7. The apparatus according to any one of claims 1 to 6, **characterised in that** the driver (15) can be simultaneously moved with the light source (25).

8. The apparatus according to any one of the claims 1 to 7, **characterised in that** the driver (15) is at least partially translucent.

9. The apparatus according to any one of the claims 1 to 8, **characterised in that** the driver (15) is designed in one piece.

10. The apparatus according to any one of claims 1 to 9, **characterised in that** the driver (15) for transporting the photoreactive substance (5) is designed in a rod-like manner.

11. The apparatus according to any one of claims 1 to 10, **characterised in that** the semipermeable layer (7) is flexible, preferably formed by a film.

12. The apparatus according to any one of claims 1 to 11, **characterised in that** the semipermeable layer (7) can be moved through the trough (13), preferably can be tensioned and fixed in the process.

## Revendications

1. Dispositif (1) pour construire une pièce, contenant une cuve (13) ayant un fond (23) au moins partiellement transparent, une couche semi-perméable (7) pouvant être au moins partiellement tendue pour recevoir une substance photosensible (5), et une phase (9) disposée sous la couche semi-perméable (7) qui peut former une couche intermédiaire (11) à l'intérieur de la substance photosensible (5), une source lumineuse (25) disposée sous le fond de la cuve (23) pour durcir la substance photoréactive (5) à certains endroits, ainsi qu'une plate-forme de construction (31) disposée au-dessus de la couche semi-perméable (7) et pouvant se lever et se baisser par rapport à cette dernière pour recevoir la pièce (3) ou chacune des couches de pièce (3ᵢ), **caractérisé en ce que** la couche semi-perméable présente au moins un entraîneur (15) sous forme d'élévation géométrique, l'entraîneur (15) s'étendant au moins à partir de la couche semi-perméable (7) en direction de la plate-forme de construction (31) et étant mobile par rapport au fond (23) de la cuve, pour une activité de transport pour reconstituer la substance photoréactive (5) par un écoulement induit dans l'espace (20) entre la plate-forme de construction (31) et la couche semi-perméable (7).

2. Dispositif selon la revendication 1, **caractérisé en ce que** la hauteur et/ou la forme de l'élévation géométrique (15) est/sont réglables.

3. Dispositif selon l'une des revendications 1 ou 2, **caractérisé en ce que** la couche semi-perméable (7) est conçue pour former une couche ou phase intermédiaire (11) à l'intérieur d'une substance photoréactive (5) par interaction avec une phase (9) située sous la couche semi-perméable (7), un système multiphase étant formé et la couche semi-perméable (7) étant au moins partiellement tendue.

4. Dispositif selon l'une des revendications 1 à 3, **caractérisé en ce que** l'élévation géométrique (15) est formée par un élément de pression (39).

5. Dispositif selon l'une des revendications 1 à 4, **caractérisée en ce que** la phase (9), dont l'état et l'épaisseur de l'agrégat est quelconque, est au moins partiellement translucide et apte à interagir avec la couche semi-perméable (7) pour former une phase intermédiaire (11).

6. Dispositif selon l'une des revendications 1 à 5, **caractérisé en ce que** la couche semi-perméable peut être déviée pour le transport de la substance photoréactive (5).

7. Dispositif selon l'une des revendications 1 à 6, **caractérisé en ce que** l'entraîneur (15) peut être déplacé simultanément avec la source lumineuse (25).

8. Dispositif selon l'une des revendications 1 à 7, **caractérisé en ce que** l'entraîneur (15) est au moins partiellement translucide.

9. Dispositif selon l'une des revendications 1 à 8, **caractérisé en ce que** l'entraîneur (15) est réalisé d'un seul tenant.

10. Dispositif selon l'une des revendications 1 à 9, **caractérisé en ce que** l'entraîneur (15) est conçu sous forme de tige pour le transport de la substance photoréactive (5).

11. Dispositif selon l'une des revendications 1 à 10, **caractérisé en ce que** la couche semi-perméable (7) est souple, de préférence, formée par un film.

12. Dispositif selon l'une des revendications 1 à 11, **caractérisé en ce que** la couche semi-perméable (7) peut être déplacée à travers la cuve (13), de préférence afin de pouvoir y être tendue et fixée.
